# EUROPEAN PATENT SPECIFICATION

(11) **EP 3 036 991 B1**
(45) Date of publication and mention of the grant of the patent: **03.07.2019**
(21) Application number: 14200016.5
(22) Date of filing: 23.12.2014
(51) Int. Cl.: A01K 5/02

(54) **Feed vehicle for feeding fur animals**
Fütterungsfahrzeug zur Fütterung von Pelztieren
Véhicule d'alimentation pour nourrir des animaux à fourrure

(43) Date of publication of application: 29.06.2016
(73) Proprietor: Hedensted Gruppen A/S, 8722 Hedensted (DK)
(72) Inventor: Madsen, Jens Jørgen, 5220 Odense SØ (DK); Lange, Kent, 8763 Rask Mølle (DK); Christiansen, Kim, 5464 Brenderup (DK)
(74) Representative: COPA Copenhagen Patents

(56) References cited:
- WO-A1-2008/101500
- CH-A- 497 831
- GB-A- 867 148
- NL-A- 7 316 993

## Description

### FIELD OF INVENTION

The present invention relates to a motorized feed vehicle for feeding fur animals, especially minks, raised in cages having wire mesh top walls and being arranged in longitudinal rows, said vehicle having a longitudinal axis and comprising a frame supported by wheels and carrying a feed container with an inner space for storing feed, especially pasty mink feed, and a feed discharge device for discharging feed on a wire mesh top wall of cages when operated and activated, and a control unit for controlling the activation of the feed discharge device, the feed discharge device comprising pumping means being upstream connected to the inner space of the feed container and downstream connected to an upstream/proximal end of a tubing, the pumping means being operable to pump feed from the container to the tubing.

### BACKGROUND OF THE INVENTION

The above type of a feed vehicle is widely used in mink farms today. Known feed vehicles are provided with a feed discharge device having a single spout for discharging a feed portion on the top wall of wire mesh cages arranged in a longitudinal row. The feed product or feed substance is pasty with a consistence allowing it to be supported by the wire mesh without portions thereof substantially dripping through the meshes. The majority of feed vehicles are manned vehicles controlled by an operator. The operator sits on the vehicle and drives the vehicle along the row of cages steering with one hand. In the other hand, he holds the spout of the feed discharge device. He manually activates the feed discharge device to discharge a feed portion by depressing a foot pedal or a finger button arranged adjacent the spout, the size of the food portion discharged on a cage being determined by the period of time the pedal is depressed.

In the period where the minks have puppies, a feed portion is delivered both to the top wall or roof of the nest box and the main box of the cages.

Other manned feed vehicles are provided with a computer in which the sizes of the feed portions to be discharged to the individual cages in a row of cages are stored. Additionally, the alternating periods of pumping feed portions and not pumping feed portions are stored in the computer. The task of the operator is to manually control the speed of the vehicle and move the spout between the cages in accordance with the movement of the vehicle.

Further unmanned i.e. automatic feed vehicles are known that are able to automatically drive along a row of cages and deliver the correct feed portion to each case. Such vehicles are disclosed in Danish patent application PA 1987 03916, DK 176402B1 and DK 177406.

Additionally, WO 2008/101500 A1 discloses a feed vehicle as mentioned above and wherein the tubing comprises two tubular arm systems with articulated joints. Each arm is at a distal end thereof provided with a spout with an outlet opening. The arms and the respective spout thereof allow for simultaneous discharge of a feed portion to the respective cages of mutually spaced and parallel rows of cages, when the vehicle drives in the aisle between the rows of cages.

Finally, CH 497831 discloses a stalling arrangement for calves comprising an aisle with a row of boxes at each side thereof. A feeding device is suspended in overhead guide rails extending in the longitudinal direction of the aisle. The feeding device comprises a feed container. In an embodiment, feed from the feed container is delivered through tubes to two longitudinally spaces teats at the respective outer end of the tubes. During operation, the teats are presented to two adjacent boxes of a row of boxes. In another embodiment, the feed from the feed container is through tubes delivered to two longitudinally spaced spouts, from which feed is discharged into respective troughs in two adjacent boxes in a row of boxes.

Feeding of the minks is especially labour demanding when using vehicles manually controlled by an operator, as the animals, most of the year, have to be fed two times a day. It is assumed that time spent feeding each mink is about 25 minutes a year and that about 85% of the time is used to pump the pasty feed portions out of the spout and about 15 % of the time is spent moving the spout from one cage to the next.

### SUMMARY OF THE INVENTION

It is the object of the present invention to provide a feed vehicle according to claim1, allowing for a reduction of the time used for feeding fur animals in a farm, especially minks in a mink farm.

The feed vehicle according to the present invention is characterized in that the tubing at a distal end thereof is provided with at least two connected spouts being arranged at the outer free end of an arm of a system of arms or links allowing for at least lateral outwardly and inwardly movement and adjustment and upwardly and downwardly movement and adjustment of the position of the spouts, and optionally also forwardly and backwardly movement and adjustment in the longitudinal direction, each spout having an outlet opening, the openings being mutually spaced to allow, during operation of the feed discharge device, simultaneous discharge of a feed portion to a spot of the top wall of both the nest box and the main box of a single cage or alternatively simultaneous discharge of a feed portion to a spot of a top wall of each of at least two adjacent cages in a first longitudinal row of cages through the outlet openings of the spouts.

By simultaneously discharging two or more feed portions either on the top wall of both the nest box and the main box of a single cage or simultaneous discharging a feed portion on the top wall of each of two or more adjacent roofs of the cages in a row, it is believed that the time spent feeding the animals in a farm can be reduced by approximately 40%. Such a reduction is extremely relevant when feeding the animals by using manned vehicles, but also relevant when feeding the animals by using an unmanned vehicle.

The tubing is preferably formed of flexible tubes or a majority of flexible tubes to allow bending thereof as desired for operating the feed discharge device. It should, however, be noted that the tubing can also be formed of mutually articulated rigid tubes or a combination of rigid and flexible tubes.

It is preferred that the outlet openings of the spouts are essentially longitudinally spaced during operation of the feed discharge device in order to facilitate discharge of feed portions on top walls of at least two adjacent cages.

When dispensing a feed portion to both the top wall of the nest box and the top wall of the main box, the spouts are preferably essentially laterally spaced during the operation of the feed discharge device.

At present, it is preferred that the tubing of the feed discharge device is provided with two spouts. It is believed that by manual feeding, it will be difficult for the operator to handle the discharge of feed portions from more than two spouts. However, for an unmanned vehicle, it is believed that at least three spouts would also be possible.

The feed discharge device and the spouts thereof can be configured so that openings of the spouts are directed essentially downwards during operation of the feed discharge device.

According to an embodiment of the invention, the openings of the spouts are arranged in an essentially common plane.

Additionally, it is preferred that the feed discharge device and the spouts thereof are configured so that the openings of the spouts are arranged in an essentially horizontal plane during operation of the feed discharge device when delivering feed portions to two or more adjacent cages.

According to an embodiment of the invention, the outlet openings of the spouts are arranged essentially in line.

Further, it is at present preferred that the feed discharge device and the spouts thereof are configured so that the openings of the spouts are arranged essentially in a common longitudinally extending horizontal line during operation of the feed discharge device when delivering feed portions to two or more adjacent cages.

When delivering feed portions to both the nest box and the main box of a single cage, it is preferred that the openings of the spouts are spaced vertically during operation of the feed discharge device as the top wall of the main box is normally situated at a higher level than the top wall of the nest box.

Further, according to an embodiment of the invention, the spouts are connected by means of a connecting means allowing for adjustment of the spacing between adjacent outlet openings of the spouts.

The connection means can e.g. be a telescopic device such as a telescopic arm or telescopic slide. The telescopic device can be manually adjustable or automatically adjustable, the latter being especially advantageous for use at unmanned or automatic feed vehicles or manned vehicles where the task of the operator is to manually move the connected spouts of the feed discharge device between the cages in accordance with the movement of the vehicle along the row of cages.

In an at present preferred embodiment of the invention, the pumping means of the feed discharge device comprises for each spout a pump having upstream an inlet and downstream an outlet, and wherein the tubing for each spout comprises a tube with an upstream/proximal and a downstream/distal end, the inlet of the respective pump being connected to the inner space of the feed container and the outlet of the respective pump being connected to the upstream/proximal end of the respective tube, the downstream/distal end of the respective tube being connected to the respective spout.

In this way, first a pump supplies feed product to a first spout through a first tube, a second pump supplies feed product to a second spout through a second tube and so on. Thereby, it is for example possible to deliver different feed products to the different spouts e.g. a first feed product to a first spout and a second feed product to a second spout. This possibility is an advantage when there are grown up minks as well as puppies in the cages, as puppies prefer a different feed product than the grown up minks. In this case, the feet container can be divided into sections containing the relevant feed products. Alternatively, the feed discharge device can be provided with water supply means for supplying water to the feed portion delivered to the top wall of the nest box of the cage. Additionally, the above embodiment allows for the discharge of different sizes of feed portions from the two spouts. Advantageously, the two pumps are identical. Thereby, the discharge of different amounts of feed product from the two spouts can advantageously be obtained by activating one of the pumps for a longer period of time than the other pumps.

In a further embodiment according to the invention, the feed discharge device comprises a single pump having upstream an inlet and downstream an outlet, the tubing comprises a tube having an upstream/proximal end and a downstream/distal end, the inlet end of the pump being connected to the inner space of the feed container, the outlet end of the pump being connected to the upstream/proximal end of the tube, the tube being at the downstream/distal end thereof divided into at least two separated tube parts, each being provided with a spout.

At present, it is preferred that the tube is bifurcated into tube parts having at least approximately the same inner cross sectional area, so that the same flow rate is flowing through tube parts and into the spouts and additionally also out of the spouts provided the flow channels thereof have identical cross sectional areas. The same size of feet portion is thereby discharged from the outlet openings of the respective spouts.

In order to allow for discharging different amounts of feed product from the spouts, the tube parts and/or the flow channels of the spouts can have different cross sectional areas.

According to a further embodiment, at least one, optionally each, tube part or spout is provided with a valve means configured to regulate the size of the flow opening or channel of the respective tube part or spout.

It is preferred that each tube part or spout is provided with a valve means.

The arms or links can be connected to form a structure similar to a robot arm, i.e. as a human arm.

Further, the arms or link can support the tubing and the spouts of the feed discharge device.

The movement of the arms or links thereof can be balanced so that the operator only has to use a minimum of force for moving and positioning the spouts.

In an unmanned vehicle, the movement of the arms or links can be carried out by computer-controlled actuators.

In the at present preferred embodiments, the system of arms comprises a upwardly extending first telescopic arm, being at its upper end connected to a laterally extending second telescopic arm, being at its outer end connected to a longitudinally extending third arm, the spouts being arranged at the outer free end of said arm.

In a further embodiment of the invention, the control unit of the feed vehicle comprises a foot pedal or a finger button, the pumping means of the feed discharge device being activated when a foot pedal or a finger button is depressed.

This embodiment of the invention is especially intended for a manned vehicle where the operator controls the size of feed portion delivered by the period of time the pedal or finger button is depressed.

According to an additional embodiment, the control unit of the vehicle comprises a preferably programmable computer for controlling the activation of the pumping means of the feed discharge device to discharge feed portions in accordance with a stored program and preferably also for controlling the longitudinal movement of the vehicle along the first row of cages.

The embodiment can be used for a manned feed vehicle, where the task of the operator is to move and position the spouts over the relevant cages, the correct sizes of the feed portions being controlled by the computer. Additionally, the movement i.e. the speed of the feed vehicle and/or the steering of the vehicle along the row of cages can also be controlled by the computer of the feed vehicle.

As mentioned several times above, the feed vehicle according to the invention can be a manned vehicle controllable by an operator on board the vehicle.

However, according to a further embodiment of the invention, the feed vehicle is an unmanned vehicle and comprises actuating means for actuating movement of the arms of the system of arms, the programmable computer being additionally configured to control the actuation means for positioning the spouts of the feed discharge device in predetermined positions above the top of the cages, and to control the longitudinal movement of the vehicle along the first row of cages.

The above unmanned embodiment of the invention can further comprise an additional feed discharge device comprising pumping means being upstream connected to the inner space of the feed container and downstream connected to a upstream/proximal end of a tubing, the pumping means being operable to pump feed from the container to the tubing, the tubing being at a distal end thereof provided with at least two connected spouts, each having an outlet opening, the openings being mutually spaced to allow, during operation of the feed discharge device, simultaneous discharge of a feed portion to a spot of the top wall of the nest box and the top wall of the main box of a single cage or simultaneous discharge of a feed portion to a spot of the top wall of each of at least two adjacent cages in a second longitudinal row of cages through the outlet openings of the spouts, the second longitudinal row being arranged opposite to and parallel with the first longitudinal row of cages.

As a result it is possible simultaneously to discharge feed portions to the cages of the first and second row of cages, feed portions being delivered to the top wall of both the nest box and the main box of each cage in each row of cages or a feed portion being simultaneously delivered to at least two adjacent cages in each row of cages. Thereby, it is possible to reduce the time spent feeding the minks in a mink farm considerably. A reduction of 40% is believed to be obtainable.

Further, the present invention relates to a method according to claim 14 of feeding - by means of the feeding vehicle according to the present invention - fur animals, especially minks, raised in cages arranged in longitudinal rows in farms, said cages having a wire mesh top wall, the method comprising the steps
- moving the feed vehicle along a longitudinal row of cages,
- simultaneous discharging a feed portion through the mutually spaced outlet openings of the connected spouts of the feed discharge device to a spot of the top wall of both the nest box and the main box of a single cage in the row of cages, or a feed portion to the top wall of each of at least two adjacent cages of the row of cages until at least one feed portion has been discharged to the desired cages of the row of cages.

The most frequently used feeding procedure is to discharge a feed portion on the top wall of each of at least two adjacent cages. However, when the minks have puppies, feed can be delivered to a spot of both the top wall of the nest box and the main box of each cage.

The advantages of the method according to the invention are essentially as described for the feed vehicle according to the invention, especially that the time spent feeding the minks can be reduced by about 40%.

In an at present preferred embodiment of the method according to the invention, the feed vehicle is manned by an operator, and where
- the operator handles the connected spouts by holding the spouts by one arm and moving them to position the outlets openings thereof close to the spots of the top wall or top walls where the feed portions are to be delivered, and
- the operator activates the pumping means of the feed discharge device to discharge the feed portions or alternatively, the pumping means of the feed discharge device is automatically activated and the feed portions thereby discharged by a program stored in a computer of the control unit of the feed vehicle.

### BRIEF DESCRIBTION OF THE FIGURES

An embodiment of the invention is described in more details in the following with regard to the accompanying figures. The figures show one way of implementing the present invention and are not to be construed as being limiting for other possible embodiments falling within the scope of protection of the attached claim set.
Fig. 1 is a perspective view of a feed vehicle according to the invention moving along a row of wire mesh cages and discharging a feed portion on the top wall of each of two adjacent cages in the row of cages,
Fig. 2 is a rear view of the feed vehicle,
Fig. 3 is a side view of the feed vehicle,
Fig. 4 is a top view of the vehicle, and
Fig. 5 is an enlarged perspective view of a feed discharge device of the feed vehicle, seen detached from the feed vehicle.

### DETAILED DESCRIPTION OF THE INVENTION

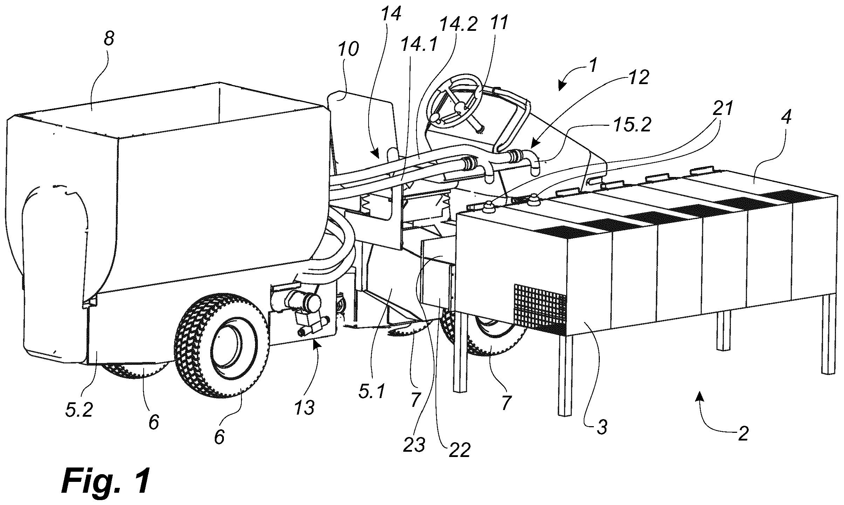

Fig. 1 discloses the motorized feed vehicle 1 according to the invention moving along a row 2 of wire mesh cages 3 in which minks are raised, only a miner portion of the row of cages being shown. The cages comprise a nest box 22 for puppies and a main box for grown up minks. Additionally, it should be noted that the walls of the cages 3 especially the top wall 4 of the main box and the top wall 23 of the nest box 22 are made of wire mesh, however, only a portion of the walls, including the top, is shown as a wire mesh wall.

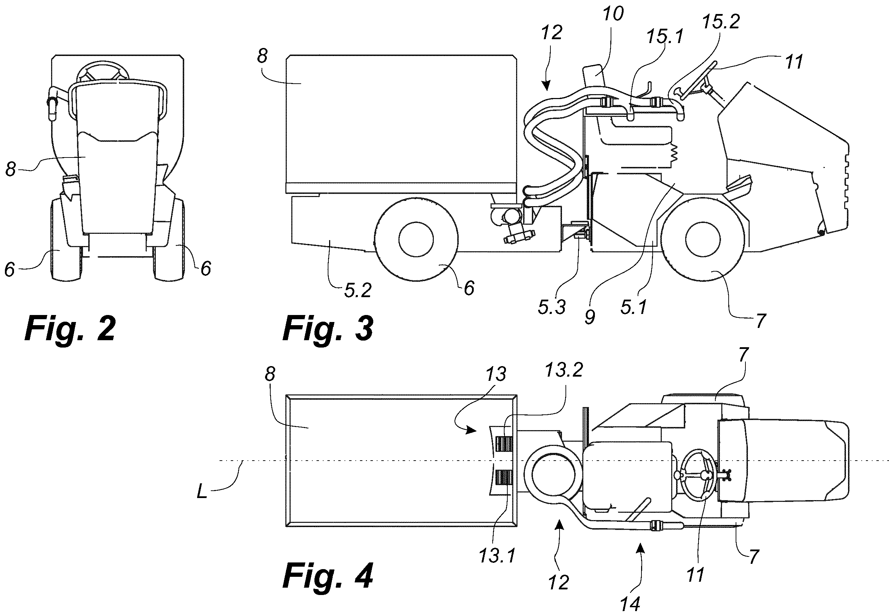

As seen in Figs. 1 to 4, the feed vehicle 1 has a longitudinal axis L, see Fig. 4, and comprises a frame 5 supported by two pairs of wheels 6,6; 7,7 which all or only one pair of wheels can be drive wheels. A feed container 8 and an operator or driver compartment 9 is arranged on the frame 5. The frame 5 comprises a front frame 5.1 and a rear frame 5.2 being mutually connected by means of a pivot point 5.3. The feed container is arranged on the rear frame and contains a pasty feed product to be delivered to the minks. The operator compartment 9 is arranged on the front frame 5.1 and contains, *inter alia,* a seat 10 for the operator and a steering wheel 11.

Additionally, the feed vehicle 1 comprises a feed discharge device 12 for discharging feed when operated and a not shown control unit for activating and or controlling the discharge of feed. The control unit may comprise a programmable computer.

The feed discharge device 12 comprises pumping means 13 being upstream connected to the inner space of the feed container 8 containing the feed product, and downstream connected to a tubing 14, the pumping means 13 being operable to pump feed from the feed container 8 to the tubing 14 and at its downstream end provided with two spouts 15.1,15.2.

In the embodiment disclosed, the pumping means 13 of the discharge device 12 comprises two pumps, a first pump 13.1 and a second pump 13.2, see Fig. 4, each driven by a motor. Each pump has upstream an inlet connected to the inner space of the container and downstream an outlet. The tubing 14 of the feed discharge device comprises two flexible tubes, a first tube 14.1 and a second tube 14.2. The outlet of the first pump 13.1 is connected to the upstream inlet of the first tube 14.1 and the outlet of the second pump 13.2 is connected to the upstream inlet of the second tube 14.2. The downstream outlet of the first tube14.1 is connected to the first spout 15.1 and the downstream outlet of the second tube14.1 is connected to the second spout 15.1. The first spout 15.1 has a first outlet opening 16.1 and the second spout 15.2 has a second outlet opening 16.2.

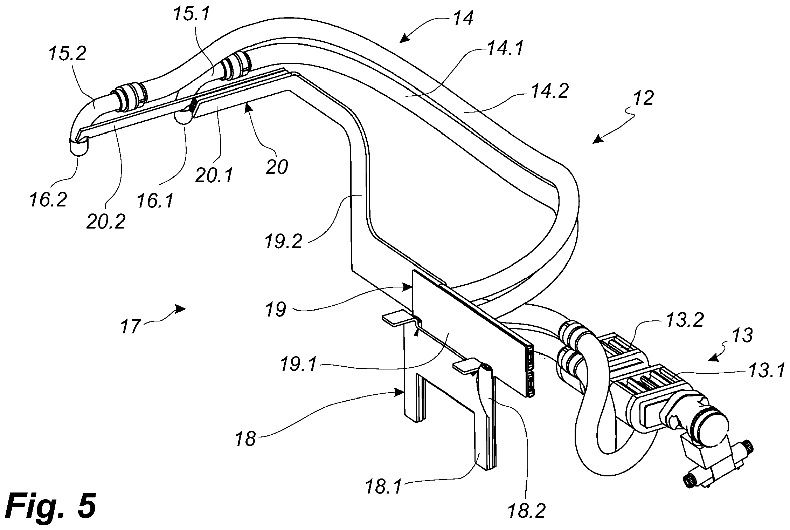

As seen most clearly in Figs. 3 and 5, the spouts 15.1 and 15.2 are, in the embodiment shown, connected to a system of arms or links 17. The arm system 17 shown comprises an upwardly extending first telescopic arm 18 having a stationary arm part 18.1 fixed to the rear portion of the front frame 5.1 and an extendable arm part 18.2. A stationary arm part 19.1 of a second telescopic arm 19 is fixed to the upper end of the extendable arm part 18.2 of the first telescopic arm 18. The second telescopic arm 19 extends laterally and is provided with an extendable arm part 19.2. A stationary arm part 20.1 of a third telescopic arm 20 is fixed to the outer end of the extendable arm part 19.2 of the second telescopic arm 19. The third telescopic arm 20 extends longitudinally and is provided with an extendable arm part 20.2. The first spout 15.1 and the second spout are connected to the extendable arm part 20.2 of the third telescopic arm 20 of the arm system 17.

The spouts 15.1 and 15.2 are arranged in line and are longitudinally spaced in a horizontal plane and their outlet openings 16.1 and 16.2 are also arranged in a common horizontal plane and are longitudinally spaced and arranged in line. The outlet openings are directed downwards. The arm system 17 allows for upwardly and downwardly moving and positioning the spouts, for laterally outwardly and inwardly moving and positioning the spouts and for longitudinally forwardly and backwardly moving the spouts.

When feeding the minks in the cages 3 in a row 2 of cages, the operator is sitting in the seat 10 of the feed wagon 1. The operator steers the feed wagon with one hand, in the present case the hand of the left arm, and manipulates the spouts connected to the extendable arm part 20.2 of the third telescopic arm 20 by holding the spouts in the other hand, in the present case the hand of the right arm. During the movement of the feed wagon along the row of cages 3, the operator positions the outlet openings 16.1;16.2 of the spouts 15.1;15.2 close to the top wall 4 of two adjacent cages 3 and activates, e.g. by depressing a foot pedal, the two pumps whereby feed product from the respective pumps 13.1;13.2 is pumped through the respective tubes 14.1;14.2 and spouts 15.1;15.2 and out through the respective outlet openings 16.1;16.2. As a result, a feed portion 21 is discharged on each top wall of the two adjacent cages. Feed is discharged as long as the operator depresses the food pedal, whereby he is able to control the size of the feed portion. When the next two cages in the row are reached by the moving feed vehicle the above procedure is repeated and so on until the last cage in the row has been provided with a feed portion. In the above method, the same size of feed portion will normally be delivered to two adjacent cages simultaneously receiving a feed portion.

As an alternative to simultaneously delivering a feed portion to the top wall 4 of two adjacent cages 3 of a row, a feed portion can simultaneously be delivered to both the top wall of the nest box and the main box of a single cage through the spaced outlet openings 16.1;16.2 of the spouts 15.1,15.2.

In the latter case, the outlet openings of the spouts are mutually spaced laterally to be able to deliver a feed portion to the top wall of the nest box and to the top wall of the main box of a cage. Furthermore, during operation of the feed discharge device, the outlet opening of the spout arranged for delivering the feed portion to the roof of the main box is at a higher level than the outlet opening of the spout arranged for delivering the feed portion to the roof of the nest box, as the latter roof is normally arranged at a lower level than the roof of the main box. The spacing between the two outlet openings advantageously corresponds to the difference between the levels of the two mentioned roofs.

In an alternative method of feeding the minks in the cages and thereby carrying out the method according to the invention, the control unit of the feed vehicle comprises a computer with a program in which the sizes of the feed portions to the different cages are stored and additionally controlling the period of time the pumps are pumping at two adjacent cages and the period of time the pumps are not running between each pair of two adjacent cages. The task of the operator is then to steer the vehicle, control the speed and move and position the spouts above the top wall of two adjacent cages. However, the computer could also steer the vehicle along the row of cages and/or also the speed of the vehicle, whereby the task of the operator would be moving and positioning the outlet of the spouts above the top wall of two adjacent cages in accordance with the computer-controlled preselected speed of the feed wagon. Computer-controlled preselected sizes of feed portions are delivered to the cages.

As an alternative to the above described embodiment of the feed vehicle, the feed vehicle can be an unmanned, i.e. an automatic feed vehicle, automatically moved along the rows of cages and from one row to another in according to a preselected computer program. Additionally, the movement of the spouts and the positioning thereof above the top wall of two adjacent cages and the delivering of feed portions of different sizes are also carried out automatically in accordance with a preselected computer program. Correspondingly, movement of the spouts and positioning thereof above the top wall of the nest box and the main box of the cage and the delivering of different feed portions to the said top walls can also be carried out automatically.

Finally, it should be noted that in the case of an automatic feed vehicle, it is possible to provide the feed vehicle with an additional feed discharge device essentially corresponding to the above described first feed discharge device but arranged and configured to deliver feed portions to the top wall of two adjacent cages or both the top wall of the nest box and the main box of each cage in an additional or second row of cages arranged spaced from and parallel with the above first row of cages. The automatic feed vehicle is moved in an aisle between the two rows of vehicles and feed portions are simultaneously discharged to the top wall of two adjacent cages or the top wall of both the nest box and the main box of a cage in each row.

### List of reference numerals

- 1: feed vehicle
- 2: row
- 3: cage
- 4: top wall
- 5: frame
- 5.1: front frame
- 5.2: rear frame
- 5.3: pivot point
- 6.6: pair of wheels
- 7.7: pair of front wheels
- 8: container
- 9: operator compartment
- 10: seat
- 11: steering wheel
- 12: feed discharge device
- 13: pumping means
- 13.1: first pump
- 13.2: second pump
- 14: tubing
- 14.1: first tube
- 14.2: second tube
- 15.1: first spout
- 15.2: second spout
- 16.1: first outlet opening
- 16.2: second outlet opening
- 17: system of arms (arm system)
- 18: first telescopic arm
- 18.1: stationary arm part
- 18.2: extendable arm part
- 19: second telescopic arm
- 19.1: stationary arm part
- 19.2: extendable arm part
- 20: third telescopic arm
- 20.1: stationary arm part
- 20.2: extendable arm part
- 21: feed portion
- 22: nest box
- 23: top wall or roof of nest box
- L: longitudinal axis

## Claims

1. A motorized feed vehicle for (1) feeding fur animals, especially minks, raised in cages (3) having wire mesh top walls (4) and being arranged in longitudinal rows (2) in farms, said vehicle (1) having a longitudinal axis LL) and comprising a frame (5) supported by wheels (6;7) and carrying a feed container (8) with an inner space for storing feed, especially pasty mink feed, and a feed discharge device (12) for discharging feed on a wire mesh top wall (4) of cages (3) when operated and activated, and a control unit for controlling the activation of the feed discharge device (12), the feed discharge device comprising pumping means (13) being upstream connected to the inner space of the feed container (8) and downstream connected to an upstream/proximal end of a tubing (14), the pumping means being (13) operable to pump feed from the container (8) to the tubing (14), wherein the tubing (14) at a distal end thereof is provided with at least two connected spouts (15.1;15.2) being arranged at the outer free end of an arm of a system of arms (17) allowing for at least a lateral outward and inward movement and adjustment and an upward and downward movement and adjustment of the position of the spouts (15.1;15.2), and optionally also a forward and backward movement and adjustment in the longitudinal direction (L), each spout having an outlet opening (16.1;16.2), the openings being mutually spaced to allow, during operation of the feed discharge device (12), simultaneous discharge of a feed portion to a spot of a top wall or roof of both the nest box (23) and the main box of a single cage (3) or alternatively discharge of a feed portion to a spot of the top wall (4) of each of at least two adjacent cages (3) in a first longitudinal row (2) of cages (3) through the outlet openings (16.1;16.2) of the spouts (15.1;15.2).

2. A vehicle according to claim 1, wherein the arms or links are connected to form a structure similar to a robot arm, i.e. like a human arm.

3. A vehicle according to claim 1 and/or claim 2, wherein the arms or links support the tubing (14) and the spouts (15.1;15.2) of the feed discharge device (12).

4. A vehicle according to any of the preceding claims, wherein the movement of the arms or links are balanced so that the operator of a manned vehicle only has to use a minimum of force for moving and positioning the spouts (15.1,15.2).

5. A vehicle according to any of the preceding claims, wherein the spouts (15.1;15.2) are connected by means of connecting means allowing for adjustment of the spacing between adjacent outlet openings (16.1;16.2) of the spouts.

6. A vehicle according to any of the preceding claims, wherein the system of arms (17) comprises an upwardly extending first telescopic arm (18), being at its upper end connected to a laterally extending second telescopic arm (19) being at its outer end connected to a longitudinally extending third arm (20), the spouts (15.1,15.2) being arranged at the outer free end of said arm (20).

7. A vehicle according to any of the preceding claims, wherein the pumping means (13) of the feed discharge device (12) for each spout (15.1;15.2) comprises a pump (13.1;13.2) having upstream an inlet and downstream an outlet, and wherein the tubing (14) for each spout comprises a tube (14.1;14.2) with an upstream/proximal end and a downstream/distal end, the inlet of the respective pump (13.1;13.2) being connected to the inner space of the feed container (8) and the outlet of the respective pump being connected to the upstream/proximal end of the respective tube (14.1;14.2), the downstream/distal end of the respective tube being connected to the respective spout (15.1;15.2).

8. A vehicle according to any of the preceding claims 1-6, wherein the pumping means of the discharge device comprises a single pump having upstream an inlet and downstream an outlet, the tubing comprises a tube having an upstream/proximal end and a downstream/distal end, the inlet end of the pump being connected to the inner space of the feed container (8), the outlet end of the pump being connected to the upstream/proximal end of the tube, the tube being divided into at least two separated tube parts, each being provided with a spout.

9. A vehicle according to claim 8, wherein at least one, optionally each, tube part or spout is provided with a valve means configured to regulate the size of the flow opening of the respective tube part or spout.

10. A vehicle according to any of the preceding claims, wherein the control unit comprises a foot pedal or a finger button, the pumping means (13) of the feed discharge device (12) being activated when a foot pedal or a finger button is depressed.

11. A vehicle according to any of the preceding claims 1 - 9, wherein the control unit comprises a preferably programmable computer for controlling the activation of the pumping means (13) of the feed discharge device (12) to discharge food portions in accordance with a stored program and preferably also for controlling the longitudinal movement e.g. steering and/or speed of the vehicle along the first row (2) of cages (3).

12. A vehicle according to any of the preceding claims 1-9 and 11, wherein the vehicle is an unmanned vehicle and comprises actuating means for actuating movement of the arms of the system of arms (17), the programmable computer additionally being configured to control the said actuation means for positioning the spouts (15.1;15.2) of the feed discharge device (12) in predetermined positions above the top walls (3;23) of the cages, and to control the longitudinal movement, e.g. the steering and/or the speed of the vehicle along the first row (2) of cages (3).

13. A vehicle according to claim 12 comprising an additional feed discharge device comprising pumping means being upstream connected to the inner space of the feed container and downstream connected to a upstream/proximal end of a tubing, the pumping means being operable to pump feed from the container to the tubing, the tubing being at a distal end thereof provided with at least two connected spouts, each having an outlet opening, the openings being mutually spaced to allow, during operation of the feed discharge device, simultaneous discharge of a feed portion to a spot of a top wall of both the nest box and the main box of a single cage or alternatively simultaneous discharge of a feed portion to each top wall of at least two adjacent cages in a second longitudinal row of cages through the outlet openings of the spouts, the second longitudinal row being arranged opposite to and parallel with the first longitudinal row (2) of cages (3).

14. A method of feeding- by means of the feeding vehicle (1) according to any the preceding claims - fur animals, especially minks, raised in cages (3) having a wire mesh top wall (4) and being arranged in longitudinal rows (2) in farms and, the method comprising the steps of:
- moving the feed vehicle along a longitudinal row (2) of cages (3),
- simultaneous discharging a feed portion through the mutually spaced outlet openings (16.1;16.2) of the connected spouts (15.1;15.2) of the feed discharge device (12) to a spot of a top wall of both the nest box (22) and the main box of the top wall (4) of a single cage (3) in the row of cages, or a feed portion (21) to the top wall (4) of each of at least two adjacent cages (3) of the row (2) of cages until at least one feed portion (21) has been discharged to the desired cages (3) of the row of cages.

15. A method according to claim 14, wherein the feed vehicle is manned by an operator and wherein
- the operator handles the connected spouts (15.1;15.2) by holding the spouts by one arm and moving them to position the outlets openings (16.1;16.2) thereof close to the spots of the top wall or top walls (4) where the feed portions (21) are to be delivered, and
- the operator activates the pumping means (13) of the feed discharge device (12) to discharge the feed portions (21) or alternatively, the pumping means (13) of the feed discharge device (12) is automatically activated and the feed portions (21) thereby discharged by a program stored in a computer of the control unit of feed vehicle (1).

## Patentansprüche

1. Motorisiertes Fütterungsfahrzeug (1) zur Fütterung von Pelztieren, insbesondere Nerzen, die in Käfigen (3) großgezogen werden, die Maschendrahtoberwände (4) aufweisen und in Längsreihen (2) in Farmen angeordnet sind, wobei das Fahrzeug (1) eine Längsachse (L) aufweist und ein Gestell (5), das von Rädern (6; 7) getragen wird und einen Futterbehälter (8) mit einem inneren Raum zum Speichern von Futter, insbesondere pastenartigem Nerzfutter, trägt, und eine Futterabgabevorrichtung (12) zum Abgeben von Futter auf eine Maschendrahtoberwand (4) von Käfigen (3), wenn sie betrieben und aktiviert wird, und eine Steuerungseinheit zum Steuern der Aktivierung der Futterabgabevorrichtung (12) umfasst, wobei die Futterabgabevorrichtung ein Pumpenmittel (13) umfasst, das stromaufwärts mit dem inneren Raum des Futterbehälters (8) verbunden ist und stromabwärts mit einem stromaufwärtigen/proximalen Ende eines Rohrwerks (14) verbunden ist, wobei das Pumpenmittel (13) betreibbar ist, um Futter von dem Behälter (8) zu dem Rohrwerk (14) zu pumpen, wobei
das Rohrwerk (14) an einem distalen Ende desselben mit wenigstens zwei verbundenen Stutzen (15.1; 15.2) versehen ist, die an dem äußeren freien Ende eines Arms eines Systems von Armen (17) angeordnet sind, das wenigstens eine seitliche Bewegung und Anpassung nach außen und innen und eine Bewegung und Anpassung nach oben und unten der Position der Stutzen (15.1; 15.2) zulässt, und optional ebenfalls eine Bewegung und Anpassung nach vorn und hinten in der Längsrichtung (L), wobei jeder Stutzen eine Auslassöffnung (16.1; 16.2) aufweist, wobei die Öffnungen gegenseitig von einander beabstandet sind, um während des Betriebs der Futterabgabevorrichtung (12) gleichzeitiges Abgeben einer Futterportion an eine Stelle einer Oberwand oder eines Dachs von sowohl dem Nestkasten (23) als auch dem Hauptkasten eines einzelnen Käfigs (3), oder alternativ Abgeben einer Futterportion an eine Stelle der Oberwand (4) von jedem von wenigstens zwei benachbarten Käfigen (3) in einer ersten Längsreihe (2) von Käfigen (3) durch die Auslassöffnungen (16.1; 16.2) der Stutzen (15.1; 15.2) zuzulassen.

2. Fahrzeug nach Anspruch 1, wobei die Arme oder Verbindungen verbunden sind, um eine einem Roboterarm ähnliche Struktur zu bilden, d.h. wie ein menschlicher Arm.

3. Fahrzeug nach Anspruch 1 und/oder Anspruch 2, wobei die Arme oder Verbindungen das Rohrwerk (14) und die Stutzen (15.1; 15.2) der Futterabgabevorrichtung (12) tragen.

4. Fahrzeug nach einem der vorstehenden Ansprüche, wobei die Bewegungen der Arme oder Verbindungen ausgeglichen sind, so dass der Bediener eines bemannten Fahrzeugs lediglich ein Minimum an Kraft aufwenden muss, um die Stutzen (15.1; 15.2) zu bewegen und zu positionieren.

5. Fahrzeug nach einem der vorstehenden Ansprüche, wobei die Stutzen (15.1; 15.2) mittels Verbindungsmitteln verbunden sind, die eine Anpassung der Beabstandung zwischen benachbarten Auslassöffnungen (16.1; 16.2) der Stutzen zulassen.

6. Fahrzeug nach einem der vorstehenden Ansprüche, wobei das System von Armen (17) einen sich nach oben erstreckenden ersten Teleskoparm (18) umfasst, der an seinem oberen Ende mit einem sich seitlich erstreckenden zweiten Teleskoparm (19) verbunden ist, der an seinem äußeren Ende mit einem sich längs erstreckenden dritten Arm (20) verbunden ist, wobei die Stutzen (15.1; 15.2) an dem äußeren freien Ende des Arms (20) angeordnet sind.

7. Fahrzeug nach einem der vorstehenden Ansprüche, wobei das Pumpenmittel (13) der Futterabgabevorrichtung (12) für jeden Stutzen (15.1; 15.2) eine Pumpe (13.1; 13.2) umfasst, die stromaufwärts einen Einlass und stromabwärts einen Auslass aufweist, und wobei das Rohrwerk (14) für jeden Stutzen ein Rohr (14.1; 14.2) mit einem stromaufwärtigen/proximalen Ende und einem stromabwärtigen/distalen Ende umfasst, wobei der Einlass der jeweiligen Pumpe (13.1; 13.2) mit dem inneren Raum des Futterbehälters (8) verbunden ist und der Auslass der jeweiligen Pumpe mit dem stromaufwärtigen/proximalen Ende des jeweiligen Rohrs (14.1; 14.2) verbunden ist, wobei das stromabwärtige/distale Ende des jeweiligen Rohrs mit dem jeweiligen Stutzen (15.1; 15.2) verbunden ist.

8. Fahrzeug nach einem der vorstehenden Ansprüche 1-6, wobei das Pumpenmittel der Abgabevorrichtung eine einzelne Pumpe umfasst, die stromaufwärts einen Einlass und stromabwärts einen Auslass aufweist, wobei das Rohrwerk ein Rohr umfasst, das ein stromaufwärtiges/proximales Ende und ein stromabwärtiges/distales Ende aufweist, wobei das Einlassende der Pumpe mit dem inneren Raum des Futterbehälters (8) verbunden ist, wobei das Aulassende der Pumpe mit dem stromaufwärtigen/proximalen Ende des Rohrs verbunden ist, wobei das Rohr in wenigstens zwei getrennte Rohrteile aufgeteilt ist, die jeweils mit einem Stutzen versehen sind.

9. Fahrzeug nach Anspruch 8, wobei wenigstens ein, optional jedes/r, Rohrteil oder Stutzen mit einem Ventilmittel versehen ist, das eingerichtet ist, um die Größe der Strömungsöffnung des jeweiligen Rohrteils oder Stutzens zu regulieren.

10. Fahrzeug nach einem der vorstehenden Ansprüche, wobei die Steuerungseinheit ein Fußpedal oder einen Fingerknopf umfasst, wobei das Pumpenmittel (13) der Futterabgabevorrichtung (12) aktiviert wird, wenn ein Fußpedal oder ein Fingerknopf heruntergedrückt wird.

11. Fahrzeug nach einem der vorstehenden Ansprüche 1-9, wobei die Steuerungseinheit einen vorzugsweise programmierbaren Computer zum Steuern der Aktivierung des Pumpenmittels (13) der Futterabgabevorrichtung (12) umfasst, um Futterportionen gemäß eines gespeicherten Programms abzugeben, und vorzugsweise ebenfalls zum Steuern der Längsbewegung, z. B. Lenken und/oder Geschwindigkeit des Fahrzeugs entlang der ersten Reihe (2) von Käfigen (3).

12. Fahrzeug nach einem der vorstehenden Ansprüche 1-9 und 11, wobei das Fahrzeug ein unbemanntes Fahrzeug ist und ein Betätigungsmittel zum Betätigen der Bewegung der Arme des Systems von Armen (17) umfasst, wobei der programmierbare Computer zusätzlich eingerichtet ist, um das Betätigungsmittel zum Positionieren der Stutzen (15.1; 15.2) der Futterabgabevorrichtung (12) in vorbestimmten Positionen über den Oberwänden (3; 23) der Käfige zu steuern, und um die Längsbewegung, z. B. das Lenken und/oder die Geschwindigkeit des Fahrzeugs entlang der ersten Reihe (2) von Käfigen (3) zu steuern.

13. Fahrzeug nach Anspruch 12, umfassend eine zusätzliche Futterabgabevorrichtung, die ein Pumpenmittel umfasst, das stromaufwärts mit dem inneren Raum des Fütterungsbehälters verbunden ist und stromabwärts mit einem stromaufwärtigen/proximalen Ende eines Rohrwerks verbunden ist, wobei das Pumpenmittel betreibbar ist, um Futter von dem Behälter zu dem Rohrwerk zu pumpen, wobei das Rohrwerk an einem distalen Ende desselben mit wenigstens zwei verbundenen Stutzen versehen ist, die jeweils eine Auslassöffnung aufweisen, wobei die Öffnungen gegenseitig von einander beabstandet sind, um während des Betriebs der Futterabgabevorrichtung gleichzeitiges Abgeben einer Futterportion an eine Stelle einer Oberwand oder eines Dachs von sowohl dem Nestkasten als auch dem Hauptkasten eines einzelnen Käfigs, oder alternativ gleichzeitiges Abgeben einer Futterportion an jede Oberwand von wenigstens zwei benachbarten Käfigen in einer zweiten Längsreihe von Käfigen durch die Auslassöffnungen der Stutzen zuzulassen, wobei die zweite Längsreihe gegenüber und parallel zu der ersten Längsreihe (2) von Käfigen (3) angeordnet ist.

14. Verfahren zum Füttern - mittels des Fütterungsfahrzeugs (1) nach einem der vorstehenden Ansprüche - von Pelztieren, insbesondere Nerzen, die in Käfigen (3) großgezogen werden, die eine Maschendrahtoberwand (4) aufweisen und in Längsreihen (2) in Farmen angeordnet sind, und wobei das Verfahren die folgenden Schritte aufweist:
- Bewegen des Fütterungsfahrzeugs entlang einer Längsreihe (2) von Käfigen (3),
- Gleichzeitiges Abgeben einer Futterportion durch die gegenseitig von einander beabstandeten Auslassöffnungen (16.1; 16.2) der verbundenen Stutzen (15.1; 15.2) der Futterabgabevorrichtung (12) an eine Stelle einer Oberwand von sowohl dem Nestkasten (22) als auch dem Hauptkasten der Oberwand (4) eines einzelnen Käfigs (3) in der Reihe von Käfigen, oder einer Futterportion (21) an die Oberwand (4) von jedem von wenigstens zwei benachbarten Käfigen (3) in der Reihe (2) von Käfigen bis wenigstens eine Futterportion (21) an die gewünschten Käfige (3) der Reihe von Käfigen abgegeben wurde.

15. Verfahren nach Anspruch 14, wobei das Fütterungsfahrzeug mit einem Bediener bemannt ist, und wobei
- der Bediener die verbundenen Stutzen (15.1; 15.2) handhabt, indem er die Stutzen mit einem Arm hält und sie bewegt, um die Auslassöffnungen (16.1; 16.2) derselben näher an die Stellen der Oberwand oder Oberwände (4) zu positionieren, an welche die Futterportionen (21) zu liefern sind, und
- der Bediener das Pumpenmittel (13) der Futterabgabevorrichtung (12) aktiviert, um die Futterportionen (21) abzugeben, oder alternativ das Pumpenmittel (13) der Futterabgabevorrichtung (12) automatisch aktiviert wird, und die Futterportionen (21) da durch von einem in einem Computer der Steuerungseinheit des Fütterungsfahrzeugs (1) gespeicherten Programm abgegeben werden.

## Revendications

1. Véhicule d'alimentation motorisé (1) pour nourrir des animaux à fourrure, notamment des visons, élevés en cages (3) ayant des parois supérieures en treillis métallique (4) et étant agencées en rangées longitudinales (2) dans des fermes, ledit véhicule (1) ayant un axe longitudinal (L) et comprenant un châssis (5) soutenu par des roues (6 ; 7) et portant un conteneur d'alimentation (8) avec un espace intérieur pour stocker l'alimentation, notamment de l'alimentation pâteuse pour vison, et un dispositif de déchargement d'alimentation (12) pour décharger l'alimentation sur une paroi supérieure en treillis métallique (4) des cages (3) lorsqu'il est actionné et activé, et une unité de commande pour commander l'activation du dispositif de déchargement d'alimentation (12), le dispositif de déchargement d'alimentation comprenant un moyen de pompage (13) étant raccordé en amont à l'espace intérieur du conteneur d'alimentation (8) et raccordé en aval à une extrémité amont/proximale d'une tuyauterie (14), le moyen de pompage (13) étant actionnable pour pomper de l'alimentation du conteneur (8) vers la tuyauterie (14), dans lequel la tuyauterie (14) à une extrémité distale de celle-ci est fournie avec au moins deux becs verseurs raccordés (15.1 ; 15.2) étant agencés à l'extrémité extérieure libre d'un bras d'un système de bras (17) permettant au moins un mouvement et ajustement latéral vers l'extérieur et vers l'intérieur et un mouvement et ajustement vers le haut et vers le bas de la position des becs verseurs (15.1 ; 15.2), et facultativement également un mouvement et ajustement vers l'avant et vers l'arrière dans la direction longitudinale (L), chaque bec verseur ayant une ouverture de sortie (16.1 ; 16.2), les ouvertures étant mutuellement espacées pour permettre, durant l'actionnement du dispositif de déchargement d'alimentation (12), un déchargement simultané d'une portion d'alimentation dans un endroit d'une paroi supérieure ou du toit du nichoir (23) et de la boîte principale d'une seule cage (3) ou alternativement le déchargement d'une portion d'alimentation dans un endroit de la paroi supérieure (4) de chacune d'au moins deux cages adjacentes (3) dans une première rangée longitudinale (2) de cages (3) à travers les ouvertures de sortie (16.1 ; 16.2) des becs verseurs (15.1 ; 15.2).

2. Véhicule selon la revendication 1, dans lequel les bras ou liens sont raccordés pour former une structure similaire à un bras robotique, c.-à-d. comme un bras humain.

3. Véhicule selon la revendication 1 et/ou la revendication 2, dans lequel les bras ou liens soutiennent la tuyauterie (14) et les becs verseurs (15.1 ; 15.2) du dispositif de déchargement d'alimentation (12).

4. Véhicule selon l'une quelconque des revendications précédentes, dans lequel le mouvement des bras ou liens est contrebalancé de sorte que le conducteur d'un véhicule piloté ne doive utiliser qu'un minimum de force pour déplacer et positionner les becs verseurs (15.1 ; 15.2).

5. Véhicule selon l'une quelconque des revendications précédentes, dans lequel les becs verseurs (15.1; 15.2) sont raccordés au moyen d'un moyen de raccordement permettant l'ajustement de l'espacement entre les ouvertures de sortie adjacentes (16.1 ; 16.2) des becs verseurs.

6. Véhicule selon l'une quelconque des revendications précédentes, dans lequel le système de bras (17) comprend un premier bras télescopique s'étendant vers le haut (18), étant, à son extrémité supérieure, raccordé à un deuxième bras télescopique s'étendant latéralement (19) étant, à son extrémité extérieure, raccordé un troisième bras s'étendant longitudinalement (20), les becs verseurs (15.1 ; 15.2) étant agencés à l'extrémité extérieure libre dudit bras (20).

7. Véhicule selon l'une quelconque des revendications précédentes, dans lequel le moyen de pompage (13) du dispositif de déchargement d'alimentation (12) pour chaque bec verseur (15.1 ; 15.2) comprend une pompe (13.1 ; 13.2) ayant une entrée en amont et une sortie en aval, et dans lequel la tuyauterie (14) pour chaque bec verseur comprend un tube (14.1 ; 14.2) avec une extrémité amont/proximale et une extrémité avale/distale, l'entrée de la pompe respective (13.1 ; 13.2) étant raccordée à l'espace intérieur du conteneur d'alimentation (8) et la sortie de la pompe respective étant raccordée à l'extrémité amont/proximale du tube respectif (14.1 ; 14.2), l'extrémité avale/distale du tube respectif étant raccordée au bec verseur respectif (15.1 ; 15.2).

8. Véhicule selon l'une quelconque des revendications 1-6, dans lequel le moyen de pompage du dispositif de déchargement comprend une seule pompe ayant une entrée en amont et une sortie en aval, la tuyauterie comprend un tube ayant une extrémité amont/proximale et une extrémité avale/distale, l'extrémité d'entrée de la pompe étant raccordée à l'espace intérieur du conteneur d'alimentation (8), l'extrémité de sortie de la pompe étant raccordée à l'extrémité amont/proximale du tube, le tube étant divisé en au moins deux parties de tube séparées, chacune étant fournie avec un bec verseur.

9. Véhicule selon la revendication 8, dans lequel au moins un(e), facultativement chacun(e), partie de tube ou bec verseur est fourni(e) avec un moyen de vanne configuré pour réguler la taille de l'ouverture d'écoulement de la partie de tube ou du bec verseur respectif(-ve).

10. Véhicule selon l'une quelconque des revendications précédentes, dans lequel l'unité de commande comprend une pédale de pied ou un bouton de doigt, le moyen de pompage (13) du dispositif de déchargement d'alimentation (12) étant activé lorsqu'une pédale de pied ou un bouton de doigt est enfoncé(e).

11. Véhicule selon l'une quelconque des revendications 1-9, dans lequel l'unité de commande comprend un ordinateur de préférence programmable pour commander l'activation du moyen de pompage (13) du dispositif de déchargement d'alimentation (12) pour décharger des portions d'alimentation selon un programme stocké et de préférence également pour commander le mouvement longitudinal c.-à-d. la direction et/ou la vitesse du véhicule le long de la première rangée (2) de cages (3).

12. Véhicule selon l'une quelconque des revendications 1-9 et 11, dans lequel le véhicule est un véhicule non piloté et comprend un moyen d'actionnement pour actionner le mouvement des bras du système de bras (17), l'ordinateur programmable étant en plus configuré pour commander ledit moyen d'actionnement pour positionner les becs verseurs (15.1 ; 15.2) du dispositif de déchargement d'alimentation (12) dans des positions prédéterminées au-dessus des parois supérieures (3 ; 23) des cages, et pour commander le mouvement longitudinal, c.-à-d. la direction et/ou la vitesse du véhicule le long de la première rangée (2) de cages (3).

13. Véhicule selon la revendication 12, comprenant un dispositif de déchargement d'alimentation supplémentaire comprenant un moyen de pompage étant raccordé en amont à l'espace intérieur du conteneur d'alimentation et raccordé en aval à une extrémité amont/proximale d'une tuyauterie, le moyen de pompage étant actionnable pour pomper de l'alimentation du conteneur vers la tuyauterie, la tuyauterie étant à une extrémité distale de celle-ci fournie avec au moins deux becs verseurs raccordés, chacun ayant une ouverture de sortie, les ouvertures étant mutuellement espacées pour permettre, durant l'actionnement du dispositif de déchargement d'alimentation, un déchargement simultané d'une portion d'alimentation dans un endroit d'une paroi supérieure du nichoir et de la boîte principale d'une seule cage ou alternativement le déchargement simultané d'une portion d'alimentation dans chaque paroi supérieure d'au moins deux cages adjacentes dans une seconde rangée longitudinale de cages à travers les ouvertures de sortie des becs verseurs, la seconde rangée longitudinale étant agencée en face de la première rangée longitudinale (2) de cages (3) et parallèle à celle-ci.

14. Procédé d'alimentation, au moyen du véhicule d'alimentation (1) selon l'une quelconque des revendications précédentes, d'animaux à fourrure, notamment les visons, élevés en cages (3) ayant une paroi supérieure en treillis métallique (4) et étant agencée en rangées longitudinales (2) dans des fermes et, le procédé comprenant les étapes consistant à :
- déplacer le véhicule d'alimentation le long d'une rangée longitudinale (2) de cages (3),
- décharger simultanément une portion d'alimentation à travers les ouvertures de sortie mutuellement espacées (16.1 ; 16.2) des becs verseurs raccordés (15.1 ; 15.2) du dispositif de déchargement d'alimentation (12) dans un endroit d'une paroi supérieure du nichoir (22) et de la boîte principale de la paroi supérieure (4) d'une seule cage (3) dans la rangée de cages, ou une portion d'alimentation (21) dans la paroi supérieure (4) de chacune d'au moins deux cages adjacentes (3) de la rangée (2) de cages jusqu'à ce qu'au moins une portion d'alimentation (21) ait été déchargée dans les cages (3) souhaitées de la rangée de cages.

15. Procédé selon la revendication 14, dans lequel le véhicule d'alimentation est piloté par un conducteur et dans lequel
- le conducteur manipule les becs verseurs raccordés (15.1 ; 15.2) en tenant les becs verseurs par un bras et en les déplaçant pour positionner les ouvertures de sortie (16.1 ; 16.2) de ceux-ci près des endroits de la paroi supérieure ou des parois supérieures (4) où les portions d'alimentation (21) doivent être distribuées, et
- le conducteur active le moyen de pompage (13) du dispositif de déchargement d'alimentation (12) pour décharger les portions d'alimentation (21) ou alternativement, le moyen de pompage (13) du dispositif de déchargement d'alimentation (12) est automatiquement activé et les portions d'alimentation (21) ainsi déchargées par un programme stocké dans un ordinateur de l'unité de commande du véhicule d'alimentation (1).
